# EUROPEAN PATENT APPLICATION

(11) **EP 2 339 571 A1**
(43) Date of publication of application: **29.06.2011**
(21) Application number: 09822041.1
(22) Date of filing: 21.10.2009
(51) Int. Cl.: G09G 3/36, G02F 1/133, G09F 9/00, G09F 9/40, G09G 3/20

(54) **DISPLAY DEVICE AND DISPLAY DEVICE DRIVE METHOD**

(30) Priority: 24.10.2008 JP 2008273855
(71) Applicant: Sharp Kabushiki Kaisha, Osaka-shi, Osaka 545-8522 (JP)
(72) Inventor: IMAMURA, Kentarou, Osaka 545-8522 (JP)
(74) Representative: Goddar, Heinz J.
(86) International application number: PCT/JP2009/068116
(87) International publication number: WO 2010/047344

(57) **Abstract**

A correction area address storage unit (22) in a display control circuit (200) of the present invention stores a correction area address AD for display elements disposed in a display area end portion A2 where light subjected to an optical path change by a light guide element is transmitted through, among the addresses of RAMs that temporarily store pixel values provided from a source external to a device. A data correcting unit (23) multiplies, based on the correction area address AD, pixel values for the display area end portion A2 by a correction coefficient set so as to compensate for a change in the chromaticity of a displayed image which is caused by the light guide element, thereby correcting the pixel values. By this, a single seamless image is displayed without a viewer given a feeling of unnaturalness caused by the difference in chromaticity.

## Description

### TECHNICAL FIELD

The present invention relates to a display device and a method of driving the display device, and more particularly to a display device that obtains a single screen by using a plurality of display panels, and a method of driving the display device.

### BACKGROUND ART

In recent years, with an increase in demand for lightweight and slim displays, there have existed a large number of, particularly, active matrix-type liquid crystal display devices using a large liquid crystal panel. However, since an increase in the size of liquid crystal panels involves many technical constrains, there conventionally exists a liquid crystal display device that obtains a single large seamless screen by combining a plurality of liquid crystal panels.

For example, conventionally, there is a liquid crystal display device in which displayed images on a plurality of liquid crystal display elements are combined on a screen without any clearance by an optical path changing means such as a Fresnel lens (see Japanese Patent Application Laid-Open No. 10-20270). In addition, Japanese Patent Application Laid-Open No. 8-136886 describes a configuration of a conventional liquid crystal display device that spreads image lights in a plurality of liquid crystal panels by concave lenses and projects the image lights onto a transmission type screen. Furthermore, Japanese Patent Application Laid-Open No. 2001-147486 describes a liquid crystal display device including a display element array; a screen; and a lens array that forms videos formed by the display element array, into an image on the screen.

### PRIOR ART DOCUMENTS

### PATENT DOCUMENTS

[Patent Document 1] Japanese Patent Application Laid-Open No. 10-20270
[Patent Document 2] Japanese Patent Application Laid-Open No. 8-136886
[Patent Document 3] Japanese Patent Application Laid-Open No. 2001-147486

### SUMMARY OF THE INVENTION

### PROBLEMS TO BE SOLVED BY THE INVENTION

In conventional liquid crystal display devices such as those described in the above-described Patent Documents 1 to 3, etc., however, a reduction in the luminance or lightness of colors of the entire displayed image occurs due to an optical path changing means, a screen, etc. In addition, when an optical path changing means is partly used, in a corresponding portion of a displayed image, a different luminance from that in the other portion or a reduction in the lightness of colors occurs. Thus, even when a single seamless image is displayed, a viewer is given a feeling of unnaturalness.

An object of the present invention is therefore to provide a display device capable of performing display so as not to create a feeling of unnaturalness as a single image which is caused by the luminance or chromaticity in a portion of a single displayed image, which is composed of a plurality of images, differing from that in other portions, or so as to reduce the feeling of unnaturalness.

### SOLUTIONS TO THE PROBLEMS

According to a first aspect of the present invention, there is provided a display device that displays an image based on an image signal provided from a source external to the device, the display device comprising:
a display panel in which a plurality of display elements for displaying the image are arranged in a matrix, and which has a picture-frame area provided at an end portion thereof, the picture-frame area having no display elements arranged therein;
a light guide element which is provided on a portion of the display panel near the picture-frame area, and which guides light emitted from the display element, above the picture-frame area by performing an optical path change;
a pixel correction circuit that multiplies a pixel value, among pixel values included in the image signal, that is to be provided to a display element whose emitted light is subjected to an optical path change by the light guide element, by a correction coefficient and sets a value obtained as a result of the multiplication as a new pixel value, the correction coefficient being predetermined so as to compensate for attenuation of light transmitted through the light guide element; and
drive means for driving the display element subjected to the optical path change, according to the new pixel value obtained by the pixel correction circuit.

According to a second aspect of the present invention, in the first aspect of the present invention,
the display panel is provided in plural number so as to come close to or come into contact with at least one other display panel, and
the light guide element is disposed to come into contact with another light guide element provided on another liquid crystal panel close to or in contact with the liquid crystal panel on which the light guide element is provided.

According to a third aspect of the present invention, in the first aspect of the present invention,
the display panel includes a plurality of types of display elements that emit different colors, and
the pixel correction circuit multiplies a pixel value to be provided to the display element subjected to the optical path change, by one of a plurality of correction coefficients that is associated with a color of light emitted from the display element subjected to the optical path change, the correction coefficients being predetermined for each of the colors.

According to a fourth aspect of the present invention, in the first aspect of the present invention,
the pixel correction circuit multiplies a pixel value to be provided to the display element subjected to the optical path change, by one of a plurality of correction coefficients that are associated with disposition locations of the respective display elements subjected to the optical path change, the correction coefficients being predetermined for each of a plurality of groups into which the display elements subjected to the optical path change are divided according to disposition location.

According to a fifth aspect of the present invention, in the fourth aspect of the present invention,
the plurality of groups include:
a first group including a display element facing a first near end portion area of a surface of the light guide element facing the display elements subjected to the optical path change, the first near end portion area being on a side close to the picture-frame area near the light guide element;
a second group including a display element facing a second near end portion area of the surface that is on a side far from the picture-frame area near the light guide element; and
a third group including a display element facing a near center area of the surface that is between the first near end portion area and the second near end portion area.

According to a sixth aspect of the present invention, in the first aspect of the present invention,
the display device further comprises an image deforming unit that deforms, when an image based on the image signal which is to be displayed by a display element subjected to an optical path change by the light guide element is displayed such that a size of the image is changed by the light guide element, an image created based on an image signal to be provided to the display element subjected to the optical path change, so as to compensate for a change in the size, thereby generating a new image signal, and
the pixel correction circuit multiplies a pixel value included in the new image signal generated by the image deforming unit, by the correction coefficient and set a value obtained as a result of the multiplication as a new pixel value.

According to a seventh aspect of the present invention, in the sixth aspect of the present invention,
the image deforming unit calculates a scale-up ratio or a scale-down ratio of an image displayed by the light guide element, based on a direction from which the display panel is viewed, and deform, based on the calculated scale-up ratio or scale-down ratio, an image created based on an image signal to be provided to a corresponding display element, so as to compensate for a change in the size, thereby generating the new image signal.

According to an eighth aspect of the present invention, in the sixth aspect of the present invention,
the image deforming unit deforms an image created based on the image signal, such that an entire image displayed on the display panel and including an image displayed by the light guide element has a constant scale-up ratio or scale-down ratio over the entire image to be displayed by the image signal, thereby generating the new image signal, and
the pixel correction circuit multiplies a pixel value, among pixel values included in the image signal generated by the image deforming unit, that is to be provided to a display element whose emitted light is subjected to an optical path change by the light guide element, by the correction coefficient and set a value obtained as a result of the multiplication as the new pixel value.

According to a ninth aspect of the present invention, in the first aspect of the present invention,
the display panel includes liquid crystal elements as the display elements.

According to a tenth aspect of the present invention, there is provided a method of driving a display device including a display panel in which a plurality of display elements for displaying an image based on an image signal provided from a source external to the device are arranged in a matrix, and which has a picture-frame area provided at an end portion thereof, the picture-frame area having no display elements arranged therein; and a light guide element which is provided on a portion of the display panel near the picture-frame area, and which guides light emitted from a display element, above the picture-frame area by performing an optical path change, the method comprising:
a pixel value correcting step of multiplying a pixel value, among pixel values included in the image signal, that is to be provided to a display element whose emitted light is subjected to an optical path change by the light guide element, by a correction coefficient and setting a value obtained as a result of the multiplication as a new pixel value, the correction coefficient being predetermined so as to compensate for attenuation of light transmitted through the light guide element; and
a driving step of driving the display element subjected to the optical path change, according to the new pixel value obtained in the pixel value correcting step.

### EFFECT OF THE INVENTION

According to the first aspect of the present invention, the light guide element that guides light emitted from a display element, above the picture-frame area by performing an optical path change is provided on a portion of the display panel near the picture-frame area. By multiplying a pixel value to be provided to a display element subjected to an optical path change by the light guide element, by a correction coefficient which is predetermined so as to compensate for attenuation of light transmitted through the light guide element, the pixel value is corrected. Thus, a change in, for example, the luminance of a display pixel (or the chromaticity of a display pixel color) which is caused by the light guide element is compensated for. Accordingly, a displayed image which is typically a single seamless image can be displayed without a viewer given a feeling of unnaturalness caused by, for example, a partial difference in luminance (or chromaticity), or can be displayed so as to reduce the feeling of unnaturalness.

According to the second aspect of the present invention, display panels are provided such that one display panel comes close to or comes into contact with at least one other display panel, and a light guide element is disposed to come into contact with another light guide element provided on another liquid crystal panel close to or in contact with the liquid crystal panel on which the light guide element is provided. Thus, a displayed image which is a single seamless image can be displayed by the plurality of display panels without a viewer given a feeling of unnaturalness caused by a partial difference in luminance (or chromaticity).

According to the third aspect of the present invention, the pixel correction circuit multiplies a pixel value to be provided to the display element subjected to an optical path change, by one of a plurality of correction coefficients, which are predetermined for each color, associated with a color of light emitted from the display element. Thus, a change in the chromaticity of a display pixel color caused by the light guide element is compensated for. Accordingly, a displayed image which is typically a single seamless image can be displayed without a viewer given a feeling of unnaturalness caused by a partial difference in chromaticity.

According to the fourth aspect of the present invention, the pixel correction circuit multiplies a pixel value to be provided to the display element subjected to the optical path change, by one of a plurality of correction coefficients, which are predetermined for each of a plurality of groups into which the display elements are divided according to disposition location, associated with the disposition locations of the respective display elements. Thus, a change in, for example, the luminance (or chromaticity) of a display pixel caused by the location in the light guide element is compensated for. Accordingly, a displayed image which is typically a single seamless image irrespective of the location in the light guide element, can be displayed without a viewer given a feeling of unnaturalness caused by a partial difference in luminance (or chromaticity).

According to the fifth aspect of the present invention, compensation is performed separately for the first group including a display element facing a first near end portion area which is on the side close to the picture-frame area near the light guide element, the second group including a display element facing a second near end portion area which is on the side far from the picture-frame area near the light guide element, and the third group including a display element facing a near center area which is near midway between the near end portion areas. Thus, a change in, for example, the luminance (or chromaticity) of a display pixel caused by the location in the light guide element, i.e. , the first near end portion area, the second near end portion area, and the near center area, is compensated for. Accordingly, a displayed image which is typically a single seamless image irrespective of the location in the light guide element, can be displayed without a viewer given a feeling of unnaturalness caused by a partial difference in luminance (or chromaticity).

According to the sixth aspect of the present invention, since an image is deformed so as to compensate for a difference in size (length) from that of the other displayed image portion, which occurs in the light guide element, a feeling of unnaturalness caused by the difference in the size (length) can be suppressed or eliminated.

According to the seventh aspect of the present invention, since a scale-up ratio or a scale-down ratio of an image to be displayed can be accurately calculated based on a direction from which the display panel is viewed, a feeling of unnaturalness caused by the above-described difference can be properly suppressed or eliminated.

According to the eighth aspect of the present invention, a difference in size (length) from that of the other displayed image portion, which occurs in the light guide element, is compensated for, and thus a feeling of unnaturalness caused by the difference can be suppressed or eliminated. Furthermore, image display is performed over the entire display panel, and thus, a seamless scaled-up image can be displayed.

According to the ninth aspect of the present invention, a liquid crystal display device having a liquid crystal display panel including liquid crystal elements as the display elements can provide the same effects as those in the first to fifth aspects of the present invention. In particular, in a liquid crystal display panel, a picture-frame area is formed without exception for the reason of a manufacturing process, and thus, in many cases, a light guide element is provided in order to obtain a displayed image which is typically a single seamless image. Therefore, the effects can be particularly provided.

According to the tenth aspect of the present invention, the same effects as those in the first aspect of the present invention can be provided by a method of driving a display device.

### BRIEF DESCRIPTION OF THE DRAWINGS

Fig. 1 is a perspective view showing a schematic configuration of a liquid crystal display device according to a first embodiment of the present invention.
Fig. 2 is a partial cross-sectional view describing structures of a liquid crystal panel and a light guide element in the embodiment.
Fig. 3 is a block diagram showing a configuration of a liquid crystal display device according to the embodiment.
Fig. 4 is a schematic diagram showing a configuration of a display unit in the embodiment.
Fig. 5 is an equivalent circuit diagram of a pixel formation portion P(n, m) included in the display unit in the embodiment.
Fig. 6 is a block diagram showing a configuration of a display control circuit in the embodiment.
Fig. 7 is a block diagram showing a configuration of a data correcting unit included in the display control circuit in the embodiment.
Fig. 8 is an xy chromaticity diagram describing the optical characteristics of the light guide element in the embodiment.
Fig. 9 is a block diagram showing a configuration of a display control circuit in a second embodiment of the present invention.
Fig. 10 is an xy chromaticity diagram showing the optical characteristics in areas of the light guide element in the embodiments.
Fig. 11 is a block diagram showing a configuration of a data correcting unit included in a display control circuit in a variant of the embodiments.
Fig. 12 is a diagram for describing a display range of a liquid crystal display device in a variant of the embodiments.
Fig. 13 is a block diagram showing a configuration of a display control circuit in a variant of the embodiments.

### MODES FOR CARRYING OUT THE INVENTION

Embodiments of the present invention will be described below with reference to the accompanying drawings.

### <1. First embodiment>

### <1.1 Overall structure of a liquid crystal display device>

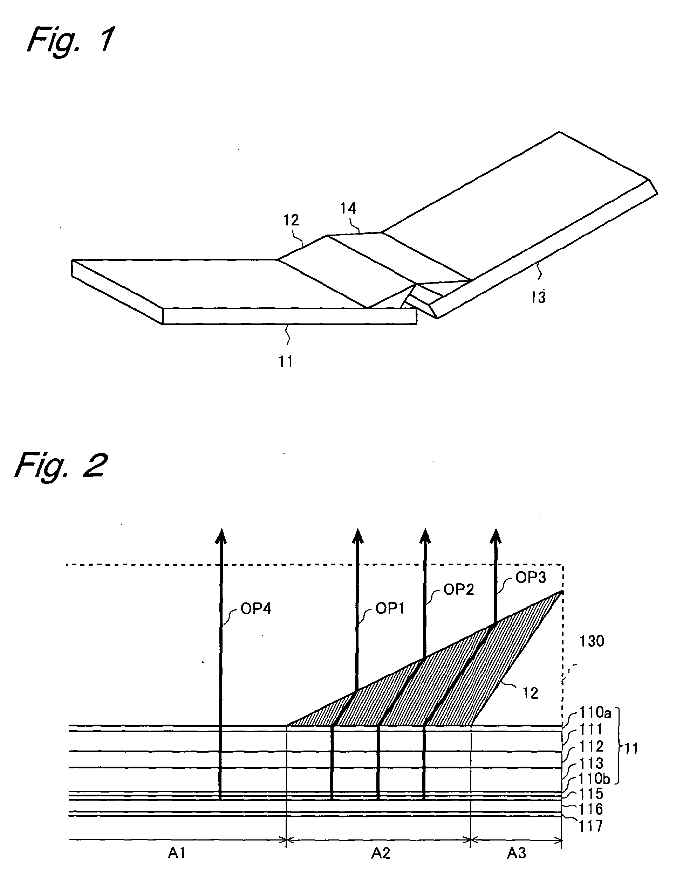

Fig. 1 is a perspective view showing a schematic structure of a liquid crystal display device of the present embodiment. The liquid crystal display device is composed of a liquid crystal panel 11 having a light guide element 12 mounted thereon, and displaying an image; and a liquid crystal panel 13 having a light guide element 14 mounted thereon, and displaying an image. As shown in Fig. 1, the liquid crystal panel 11 and the liquid crystal panel 13 are provided such that their end portions come close to each other, and are connected by a movable mechanism (e.g., a hinge) which is not shown, so that the relative angle between their display surfaces can be changed. Note that such a movable mechanism is an example and may be omitted; for example, the liquid crystal panel 11 and the liquid crystal panel 13 may be fixed such that their end portions come into contact with each other in a position where their display surfaces lie in the same plane.

The light guide element 12 is a fiber (face)plate that changes the optical path of light emitted from the liquid crystal panel 11, and has the function of changing a display area (display surface) of the liquid crystal panel 11. Also, the light guide element 14 provided to come into contact with the end portion of the light guide element 12 has the same function. Here, the fiber plate is in a form where single fibers with a diameter of several µm are bundled. Each single fiber is composed of a core glass that transmits light; a cladding glass arranged to cover the core glass and having a different refractive index from the core glass; and an absorber that absorbs light leaking from the core glass. Since each of the single fibers can transmit light without interference with other single fibers, an image provided to a light-incoming surface of the fiber plate (which is the light-incoming surfaces of all of the single fibers) is obtained as it is from a light-outgoing surface. Therefore, by performing an optical path change on part of two images displayed by the two liquid crystal panels 11 and 13, by the light guide elements 12 and 14 which are such fiber plates, a single image with no cut line or no line of junction (seamless) can be displayed, which will be described in detail below.

In general, an area where display cannot be performed (hereinafter, referred to as the "picture-frame area") is provided around a liquid crystal panel. The picture-frame area is provided because it is required as clearance upon manufacturing. Namely, a substrate (TFT substrate which will be described later) configuring a liquid crystal panel is manufactured such that a plurality of substrates are formed on a single base substrate and then are cut off one by one. Therefore, a picture-frame area is required as clearance of a cut-off portion. In addition, the picture-frame area is used as an area where a sealing agent for sealing a liquid crystal is applied. Thus, the liquid crystal panels 11 and 13 having such a picture-frame area cannot obtain a single displayed image which is seamless as a whole, even if the liquid crystal panels 11 and 13 are disposed with their respective one sides coming into contact with each other. In view of this, by providing the light guide elements 12 and 14 near the display unit end portions of the liquid crystal panels 11 and 12 and on the picture-frame areas of the liquid crystal panels 11 and 12, images near the display unit end portions are subjected to an optical path change so as to be displayed above the picture-frame areas. By this, a single seamless displayed image can be obtained. With reference to Fig. 2, the structures of such a liquid crystal panel 11 and a light guide element 12 will be described below.

Fig. 2 is a partial cross-sectional view showing the structures of the liquid crystal panel and the light guide element. Note that in Fig. 2 paths (optical paths) OP1 to OP4 of lights exiting from the liquid crystal panel 11 (in practice, a light guide plate 116 in a backlight device which will be described later) are illustrated by thick lines and arrows. Note also that a transparent cover 130 shown in Fig. 2, though not sown in Fig. 1, is provided to protect the liquid crystal panel 11 and the light guide element 12.

This Fig. 2 mainly shows cross-sections of the liquid crystal panel 11 and the light guide element 12 which are an enlarged view of a portion near the light guide element 12 when the liquid crystal panel shown in Fig. 1 is cut in a longitudinal direction. The underside of the light guide element 12, which is a fiber plate, where light from the liquid crystal panel 11 enters (i.e., the light-incoming surfaces of all of the single fibers composing the fiber plate) is bonded onto a portion of a display area of the liquid crystal panel 11 near the end portion (hereinafter, simply referred to as the "display area end portion") A2. In addition, the light guide element 12 has such a form that an upper inclined surface, from which light from the liquid crystal panel 11 exits (i.e., the light-outgoing surfaces of all of the single fibers), is included in (covers) a range from directly above the display area end portion A2 to directly above a picture-frame area A3 of the liquid crystal panel 11. Hence, light that exits from the display area end portion A2 of the liquid crystal panel 11 and enters the light guide element 12 is subjected to an optical path change by the light guide element 12 and thus exits in a direction directly above the picture-frame area A3. Therefore, a seamless image is displayed as if the picture-frame area A3 where display cannot be performed did not exist.

The liquid crystal panel 11 performs various types of display by controlling, on a pixel-by-pixel basis, the amount of transmitted light provided from a light source, such as a Light Emitting Diode (LED), which is included in a backlight device and which is not shown. Thus, the liquid crystal panel 11 includes a TFT (Thin Film Transistor) substrate 111 having a polarizing plate 110a adhered to a top surface thereof; a CF (Color Filter) substrate 113 having a polarizing plate 110b adhered to a bottom surface thereof; and a liquid crystal layer 112 sandwiched between the substrates. A specific configuration for displaying an image by them will be described in detail later.

The backlight device is provided such that a top surface thereof comes into contact with a bottom surface of the liquid crystal panel 11, and has the above-described light source, which is not shown, provided at an end portion thereof. The backlight device includes a light guide plate 116 that emits light from the light source from an illuminating surface in a planar manner; a lens sheet and the like 115 including a lens sheet, a light diffusion sheet, etc., and disposed on the top surface side (illuminating surface side) of the light guide plate; and a reflection sheet 117 adhered to the bottom surface side (the opposite side of the illuminating surface) of the light guide plate. Light from the light source of the backlight device enters a predetermined light-incoming surface of the light guide plate, and thereafter, the light is diffused throughout the light guide plate and is thereby radiated from the illuminating surface in a planar manner. Of the lights radiated in this manner, those lights that exit from the display area end portion A2 of the liquid crystal panel 11 pass through the light guide element 12, and those lights that exit from a display area (hereinafter, referred to as the "normal display area") A1 other than the display area end portion A2 of the liquid crystal panel 11 exit outside the device without passing through the light guide element 12 and form a displayed image. Next, the overall configuration and operation of the liquid crystal display device for forming such a displayed image will be described.

### <1.2 Overall configuration and operation of the liquid crystal display device>

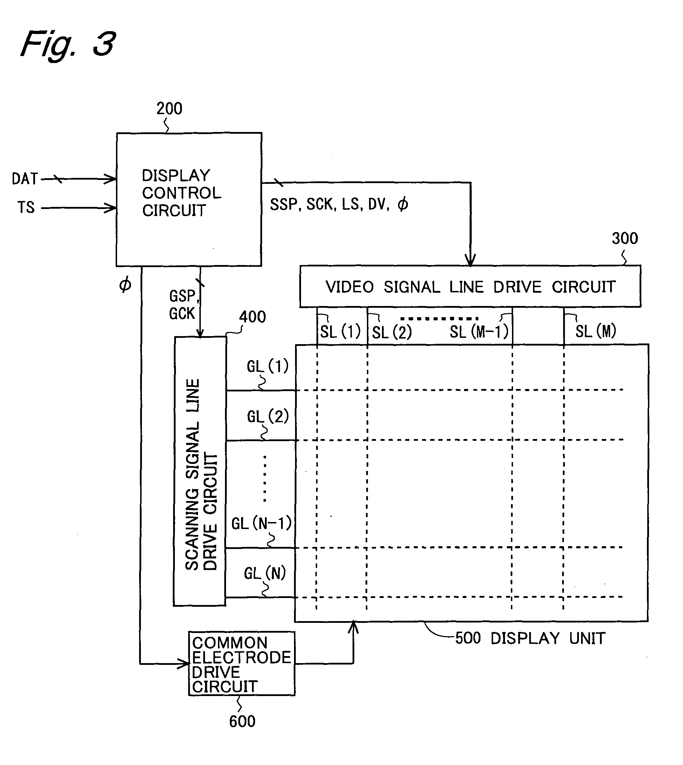

Fig. 3 is a block diagram showing an overall configuration of an active matrix-type liquid crystal display device according to a first embodiment of the present invention. The liquid crystal display device includes a drive control unit including a display control circuit 200, a video signal line drive circuit 300, and a scanning signal line drive circuit (gate driver) 400; a display unit 500; and a common electrode drive circuit 600. Note that the display control circuit 200 and the video signal line drive circuit 300 are, in many cases, composed of different Large Scale Integration Circuit (hereinafter, abbreviated as "LSI") chips; however, here, they are composed of a single LSI chip (RAM built-in type source driver). Note that a drive control circuit in which a gate driver is added to the LSI chip may be composed of a single LSI chip, or may be monolithically formed on a glass substrate of a liquid crystal panel, instead of a chip.

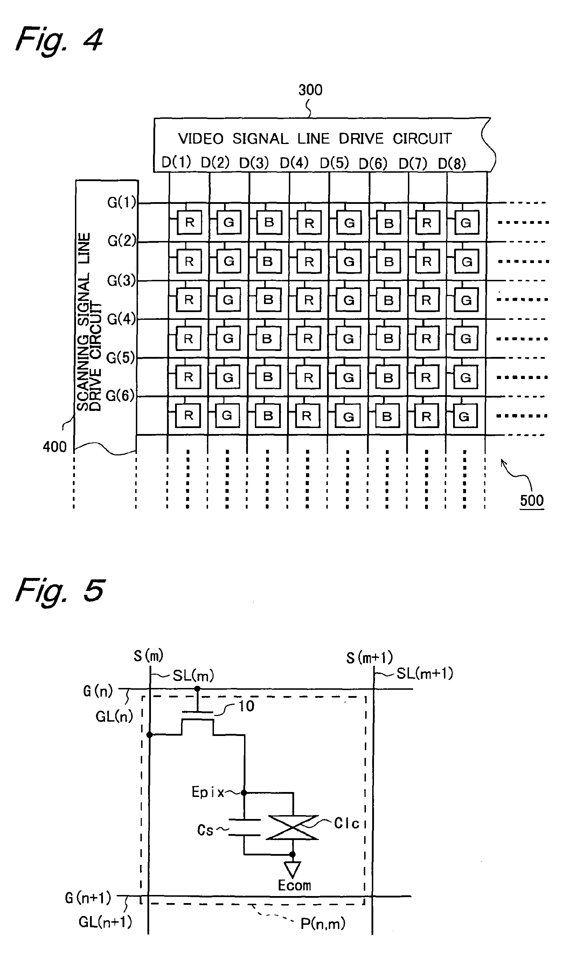

The display unit 500 shown in Fig. 3 includes a plurality of (M) video signal lines SL(1) to SL(M); a plurality of (N) scanning signal lines GL(1) to GL(N); and a plurality of (MxN) pixel formation portions provided at respective intersections of the plurality of video signal lines SL(1) to SL(M) and the plurality of scanning signal lines GL(1) to GL(N) (a pixel formation portion provided at an intersection of a scanning signal line GL(n) and a video signal line SL (m) is hereinafter indicated by reference numeral "P(n, m)"), and is configured as shown in Figs. 4 and 5. Here, Fig. 4 schematically shows a configuration of the display unit 500 in the present embodiment, and Fig. 5 shows an equivalent circuit of a pixel formation portion P(n, m) in the display unit 500.

As shown in Figs. 4 and 5, each pixel formation portion P(n, m) is composed of a TFT (Thin Film Transistor) 10 which is a switching element having a gate terminal connected to a scanning signal line GL (n) that passes through a corresponding intersection, and having a source terminal connected to a video signal line SL (m) that passes through the intersection; a pixel electrode Epix connected to a drain terminal of the TFT 10; a common electrode (also referred to as a "counter electrode") Ecom which is commonly provided to the plurality of pixel formation portions P(i, j) (i = 1 to N and j = 1 to M); and a liquid crystal layer which is commonly provided to the plurality of pixel formation portions P(i, j) (i = 1 to N and j = 1 to M), and which is sandwiched between the pixel electrode Epix and the common electrode Ecom and serves as an electro-optic element.

Note that in Fig. 4 the characters "R", "G", and "B" provided to the pixel formation portions P (n, m) represent the colors, "red", "green", and "blue", displayed by the pixel formation portions P(n, m). Therefore, in practice, a set of pixels of the RGB colors formed by RGB pixel formation portions forms a single color pixel. In the present embodiment, for example, a line inversion drive scheme is adopted which is a drive scheme where the positive and negative polarities of voltages applied to pixel liquid crystals are reversed every row in the display unit 500 and every frame.

As shown in Fig. 5, in each pixel formation portion P(n, m), a liquid crystal capacitance Clc is formed by the pixel electrode Epix and the common electrode Ecom facing the pixel electrode Epix with the liquid crystal layer interposed therebetween. An auxiliary capacitance Cs is formed near the liquid crystal capacitance Clc.

When a scanning signal G(n) applied to a scanning signal line GL(n) is placed in an active state, the scanning signal line is selected and thus a corresponding TFT 10 is placed in a conducting state. Then, a driving video signal S(m) is applied to a corresponding pixel electrode Epix through a corresponding video signal line SL(m). By this, a voltage of the applied driving video signal S(m) (a voltage using the potential of the common electrode Ecom as a reference potential) is written, as a pixel value, into a pixel formation portion P(n, m) including the pixel electrode Epix.

Note that the pixel formation portions P(n, m) perform display by controlling the transmittance of light from (the light guide plate 116 of) the backlight device, and thus, the pixel formation portions P (n, m) including the backlight device are herein called display elements.

The display control circuit 200 receives a display data signal DAT and a timing control signal TS which are sent from an external source, and outputs a digital image signal DV and a source start pulse signal SSP, a source clock signal SCK, a latch strobe signal LS, a gate start pulse signal GSP, a gate clock signal GCK, and a polarity reversal signal φ which are for controlling timing at which an image is displayed on the display unit 500. In addition, the display control circuit 200 makes appropriate correction to the received display data signal DAT so as to compensate for a chromaticity change caused by the light guide element 12, and outputs the corrected signal as a digital image signal DV. This operation and a detailed configuration will be described later.

The video signal line drive circuit 300 receives the digital image signal DV, the source start pulse signal SSP, the source clock signal SCK, and the latch strobe signal LS which are outputted from the display control circuit 200, and applies driving video signals to the video signal lines SL (1) to SL(M), respectively, to charge the pixel capacitances of the respective pixel formation portions P (n, m) in the display unit 500. At this time, the video signal line drive circuit 300 sequentially holds digital image signals DV indicating voltages to be applied to the video signal lines SL(1) to SL(M), respectively, at timing at which a pulse of the source clock signal SCK is generated. Then, the held digital image signals DV are converted to analog voltages at timing at which a pulse of the latch strobe signal LS is generated. The converted analog voltages are applied all at once to all of the video signal lines SL (1) to SL(M), as driving video signals. Namely, in the present embodiment, for a drive scheme for the video signal lines SL (1) to SL (M), a line sequential drive scheme is adopted. Note that the polarities of the video signals applied to the video signal lines SL(1) to SL(M) are reversed according to a polarity reversal signal φ, to perform alternating-current drive of the display unit 500.

The scanning signal line drive circuit 400 sequentially applies active scanning signals to the scanning signal lines GL(1) to GL(N), respectively, based on the gate start pulse signal GSP and the gate clock signal GCK which are outputted from the display control circuit 200.

The common electrode drive circuit 600 generates a common voltage Vcom which is a voltage to be provided to the common electrode of the liquid crystals. In the present embodiment, the potential of the common electrode is also changed according to alternating-current drive, to suppress the amplitudes of voltages on the video signal lines.

In the above-described manner, driving video signals are applied to the video signal lines SL (1) to SL(M), respectively, and scanning signals are applied to the scanning signal lines GL (1) to GL(N), respectively, whereby the light transmittance of the liquid crystal layer is controlled and an image is displayed on the display unit 500.

### <1.3 Configuration and operation of the display control circuit>

### <1.3.1 Overall configuration and operation of the display control circuit>

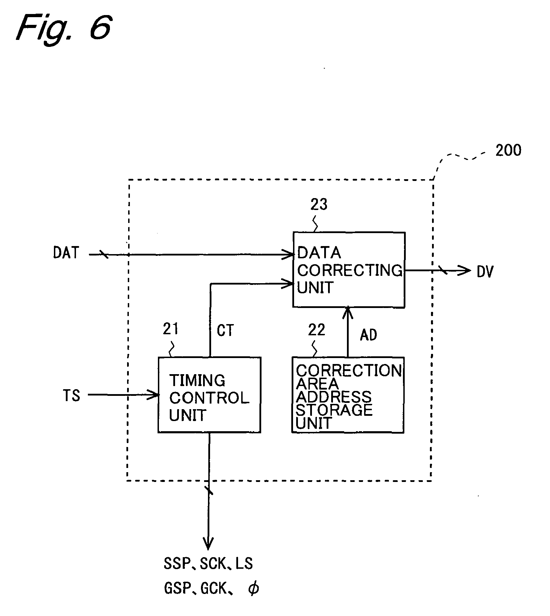

Fig. 6 is a block diagram showing an overall configuration of the display control circuit in the present embodiment. The display control circuit 200 includes a timing control unit 21 that performs timing control; a correction area address storage unit 22 that stores a correction area address AD for display elements disposed in the display area end portion A2; and a data correcting unit 23 that receives pixel values (display gray-level data) included in a display data signal DAT provided from a source external to the device, and multiplies, based on the correction area address AD stored in the correction area address storage unit 22, pixel values for the display area end portion A2 by predetermined correction coefficients, thereby correcting the pixel values.

The timing control unit 21 shown in Fig. 6 receives a timing control signal TS sent from an external source, and outputs a control signal CT for controlling the operation of the data correcting unit 23, and a source start pulse signal SSP, a source clock signal SCK, a latch strobe signal LS, a gate start pulse signal GSP, a gate clock signal GCK, and a polarity reversal signal φ which are for controlling timing at which an image is displayed on the display unit 500.

The correction area address storage unit 22 stores an address, among the addresses of RAMs for the respective colors which are included in the data correcting unit 23 and which will be described later, at which are stored pixel values to be provided to display elements disposed in the display area end portion A2. Note that the display elements of the respective colors disposed in the display area end portion A2 in the present embodiment specifically form all display columns included in the display area end portion A2 near the right end of the display area, as can be seen by referring to Figs. 1, 2, and 4.

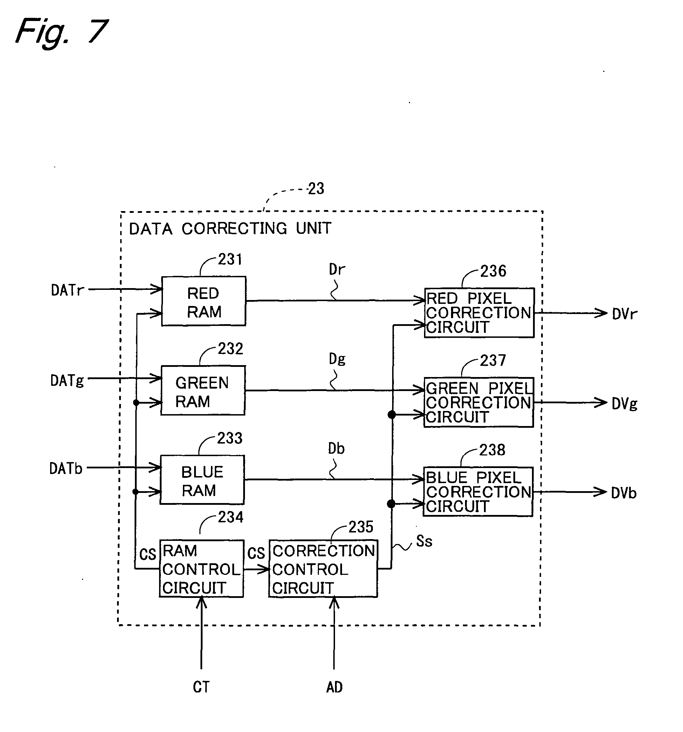

The data correcting unit 23 receives pixel values (display gray-level data) included in a display data signal DAT provided from a source external to the device, and (temporarily) stores the pixel values in the RAMs which will be described later. Thereafter, the data correcting unit 23 sequentially reads the pixel values stored in the RAMs, based on a control signal CT from the timing control unit 21. When the address of a read pixel value matches a correction area address AD read from the correction area address storage unit 22, the data correcting unit 23 multiplies the pixel value by a predetermined correction coefficient, thereby correcting the pixel value. A detailed configuration and operation of such a data correcting unit 23 will be described with reference to Fig. 7.

### <1.3.2 Configuration and operation of the data correcting unit>

Fig. 7 is a block diagram showing a configuration of the data correcting unit included in the display control circuit in the present embodiment. The data correcting unit 23 includes a red RAM 231 that stores in turn red display data DATr included in a display data signal DAT provided from a source external to the device; a green RAM 232 that stores in turn green display data DATg included in the display data signal DAT; a blue RAM 233 that stores in turn blue display data DATb included in the display data signal DAT; a RAM control circuit 234 that controls the red RAM 231, the green RAM 232, and the blue RAM 233 (hereinafter, collectively referred to as the "RAMs for the respective colors"); a red pixel correction circuit 236 that corrects the pixel values of pixels located in the display area end portion A2 among red pixel values Dr read from the red RAM 231; a green pixel correction circuit 237 that corrects the pixel values of pixels located in the display area end portion A2 among green pixel values Dg read from the green RAM 232; a blue pixel correction circuit 238 that corrects the pixel values of pixels located in the display area end portion A2 among blue pixel values Db read from the blue RAM 233; and a correction control circuit 235 that controls the red pixel correction circuit 236, the green pixel correction circuit 237, and the blue pixel correction circuit 238 (hereinafter, collectively referred to as the "pixel correction circuits for the respective colors"). Note that the RAMs for the respective colors are composed of three semiconductor chips, but may be composed of three different storage areas in a single semiconductor chip or may be composed of a part of a semiconductor memory or the like that composes the correction area address storage unit 22.

The RAM control circuit 234 outputs, based on a control signal CT from the timing control unit 21, a RAM control signal CS including a read address for reading in turn pixel values of the respective colors stored in the RAMs for the respective colors. The RAMs for the respective colors output pixel values of the respective colors Dr, Dg, and Db according to the RAM control signal CS.

The correction control circuit 235 receives a RAM control signal CS from the RAM control circuit 234 and compares an address of the RAMs for the respective colors, which is included in the RAM control signal CS and at which pixel values currently read are stored, with a correction area address AD read from the correction area address storage unit 22. When the addresses match, the correction control circuit 235 provides a correction instruction signal Ss instructing to correct the pixel values, to the pixel correction circuits for the respective colors.

When the red pixel correction circuit 236 does not receive a correction instruction signal Ss from the correction control circuit 235, the red pixel correction circuit 236 outputs a received red pixel value Dr as it is, as a red digital image signal DVr. When the red pixel correction circuit 236 receives a correction instruction signal Ss, the red pixel correction circuit 236 multiplies the pixel value Dr by a predetermined red correction coefficient Kr, and outputs a pixel value obtained as a result of the multiplication, as a red digital image signal DVr. In addition, the green pixel correction circuit 237 also similarly outputs a green digital image signal DVg, but here instead of the red correction coefficient Kr, a predetermined green correction coefficient Kg is multiplied depending on the case. Furthermore, the blue pixel correction circuit 238 also similarly outputs a blue digital image signal DVb, but here a predetermined blue correction coefficient Kb is multiplied depending on the case.

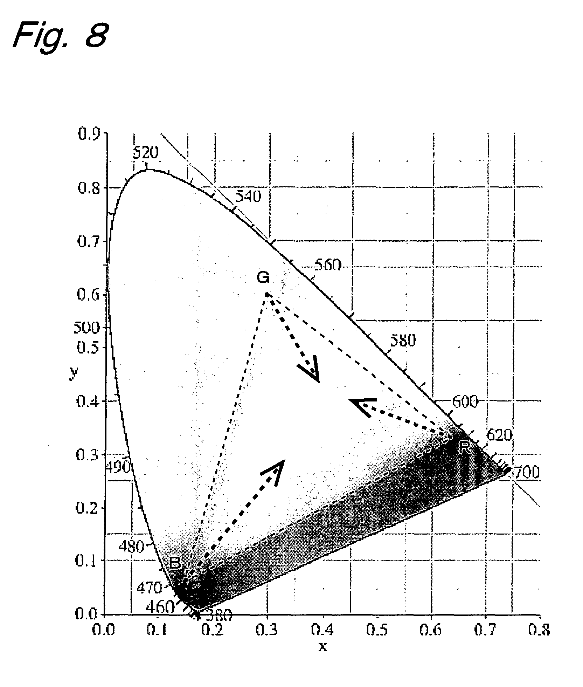

Here, the correction coefficients Kr, Kg, and Kb for the respective colors are predetermined according to the optical characteristics of the light guide element 12. Fig. 8 is an xy chromaticity diagram describing the optical characteristics of the light guide element. This Fig. 8 is the same as a general xy chromaticity diagram. A dashed-line triangle shown in the drawing represents a color range in sRGB (standard RGB), and a point near the upper left end corresponds to green (G), a point near the lower left end corresponds to blue (B), and a point near the right end in the drawing corresponds to red (R). In addition, arrows shown in Fig. 8 simply represent, in an xyz color system, how lights transmitted through the light guide element 12 undergo attenuation.

As can be seen by referring to this Fig. 8, lights transmitted through the light guide element 12 are attenuated to shift to yellow, and the lightness of display colors for the display area end portion A2 of the liquid crystal panel 11 is reduced to shift to yellow. Hence, even when a single seamless image is displayed by the light guide element 12, as described above, a viewer is given a feeling of unnaturalness. In view of this, the correction coefficients Kr, Kg, and Kb for the respective colors are determined so as to compensate for such a change in chromaticity (specifically, a reduction in the lightness of the respective RGB colors) in a displayed image. Note that the relationship between the correction coefficients Kr, Kg, and Kb for the respective colors is: Kb > Kr and Kb > Kg, and Kr and Kg have substantially the same value. When the correction coefficients are seen as correction values for voltages applied to liquid crystals, the correction values are values on the order of 0.2 to 5. Of course, the values change depending on the material, structure, etc., of the light guide element 12, and thus, appropriate values are selected to compensate for a change in chromaticity such as that described above. Note that, in the case in which the liquid crystal panel 11 is of a normally black type (i.e., the case in which the higher the voltage applied to the liquid crystal, the higher the display luminance), when one of the correction values for voltages applied to liquid crystals is less than 1, the luminance of a corresponding color is attenuated; however, by setting the correction values for the other different colors to 1 or more (typically, 5, the maximum value), as a result, the lightness of the other colors can be increased relatively (typically, over five times) with respect to the lightness of the attenuated color.

When the change in chromaticity (the reduction in the lightness of the respective colors) is compensated for by multiplying the correction coefficients Kr, Kg, and Kb, as described above, it is desirable that calculated pixel values not exceed displayable maximum values, in terms of performing full compensation. Hence, in order that pixel values calculated by multiplying the correction coefficients Kr, Kg, and Kb do not exceed the displayable maximum values, the pixel correction circuits for the respective colors may be configured to multiply all pixel values including the pixel values of pixels to be displayed in the normal display area A1, by a predetermined attenuation coefficient so that the lightness (of the colors) of all of the pixels to be displayed in the normal display area A1 of the liquid crystal panel 11 is reduced. Specifically, the attenuation coefficient is set such that, even when the maximum values of respective pixel values are multiplied by the maximum values of the correction coefficients Kr, Kg, and Kb, values obtained by multiplying the multiplied values by the attenuation coefficient do not exceed the displayable maximum values.

### <1.4 Effect of the first embodiment>

As described above, in the liquid crystal display device including the data correcting unit 23 of the display control circuit 200 in the present embodiment, a change in the chromaticity of display colors (a reduction in the lightness of the respective RGB colors) for the display area end portion A2 of the liquid crystal panel 11, which is caused by the light guide element 12, is compensated for. Thus, a single seamless image can be displayed without a viewer given a feeling of partial unnaturalness caused by the difference in chromaticity.

### <2. Second embodiment>

### <2.1 Overall configuration and operation of a liquid crystal display device>

An overall configuration of an active matrix-type liquid crystal display device according to a second embodiment of the present invention (see Figs. 1 to 3) is the same as that in the first embodiment, and a configuration of a display unit 500 (see Fig. 4), an equivalent circuit of a pixel formation portion P (n, m) in the display unit 500 (see Fig. 5), etc., also have the same configurations as those in the first embodiment, and thus, description thereof is omitted.

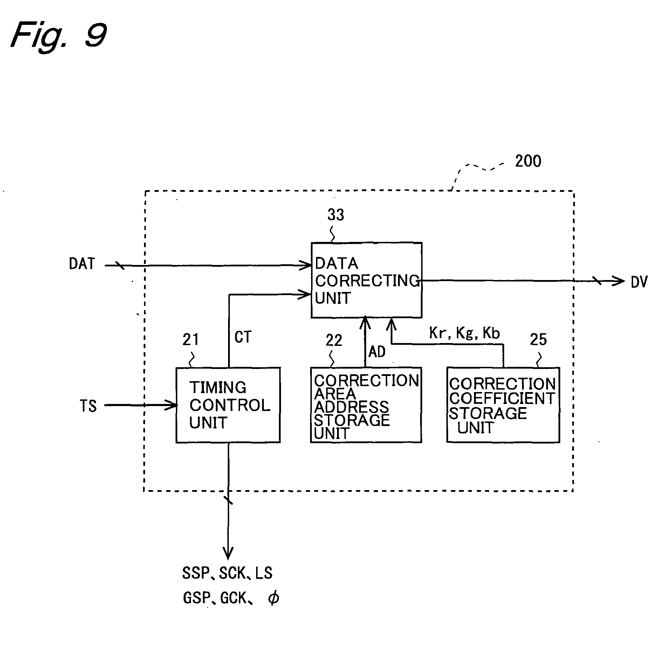

The liquid crystal display device in the present embodiment differs from that in the first embodiment in part of the configuration and operation of a display control circuit 200. The configuration and operation of the display control circuit 200 will be described in detail below with reference to Fig. 9.

### <2.2 Configuration and operation of the display control circuit>

Fig. 9 is a block diagram showing a configuration of the display control circuit 200 in the second embodiment. The display control circuit 200 includes a timing control unit 21 that performs the same timing control as in the first embodiment; a correction coefficient storage unit 25 that stores a plurality of sets of correction coefficients Kr, Kg, and Kb associated with correction area addresses AD and that is not provided in the first embodiment; a correction area address storage unit 22 that stores two types of correction area addresses which will be described later; and a data correcting unit 33 that receives pixel values (display gray-level data) included in a display data signal DAT, and multiplies, based on a correction area address AD stored in the correction area address storage unit 22, pixel values for a display area end portion A2 by correction coefficients Kr, Kg, and Kb associated with the correction area address AD obtained from the correction coefficient storage unit 25, thereby correcting the pixel values.

First, the correction area address storage unit 22 stores a first correction area address AD1 and a second correction area address AD2 which will be described later. Note that in the following the first and second correction area addresses AD1 and AD2 are collectively referred to as the correction area addresses AD.

The correction coefficient storage unit 25 stores first correction coefficients Kr1, Kg1, and Kb1 associated with the first correction area address AD1, and second correction coefficients Kr2, Kg2, and Kb2 associated with the second correction area address AD2. Note that in the following the first and second correction coefficients Kr1, Kg1, Kb1, Kr2, Kg2, and Kb2 are collectively referred to as the correction coefficients Kr, Kg, and Kb.

Furthermore, the data correcting unit 33 includes a red RAM 231, a green RAM 232, a blue RAM 233, and a RAM control circuit 234 that perform the same operation as a data correcting unit 23 in the first embodiment which is shown in Fig. 7; and a red pixel correction circuit 236, a green pixel correction circuit 237, a blue pixel correction circuit 238, and a correction control circuit 235 that perform operation that partly differs from that of the data correcting unit 23 in the first embodiment.

Specifically, the correction control circuit 235 included in the data correcting unit 33 in the present embodiment receives a RAM control signal CS from the RAM control circuit 234, as in the first embodiment, and compares an address of the RAMs for the respective colors, which is included in the RAM control signal CS and at which pixel values currently read are stored, with first and second correction area addresses AD1 and AD2 read from the correction area address storage unit 22. Then, when the address of the RAMs for the respective colors matches any one of the first and second correction area addresses AD1 and AD2, in addition to a correction instruction signal Ss which is the same as that in the first embodiment, first correction coefficients Kr1, Kg1, and Kb1 associated with the first correction area address AD1 or second correction coefficients Kr2, Kg2, and Kb2 associated with the second correction area address AD2 are further provided to the pixel correction circuits for the respective colors.

When the red pixel correction circuit 236 does not receive a correction instruction signal Ss and a red correction coefficient Kr from the correction control circuit 235, the red pixel correction circuit 236 outputs a received red pixel value Dr as it is, as a red digital image signal DVr. When the red pixel correction circuit 236 receives a correction instruction signal Ss and a red correction coefficient Kr, the red pixel correction circuit 236 multiplies the pixel value Dr by the received red correction coefficient Kr (specifically, Kr1 or Kr2), and outputs a pixel value obtained as a result of the multiplication, as a red digital image signal DVr. In addition, the green pixel correction circuit 237 also similarly outputs a green digital image signal DVg, but here a received green correction coefficient Kg (specifically, Kg1 or Kg2) is multiplied. Furthermore, the blue pixel correction circuit 238 also similarly outputs a blue digital image signal DVb, but here a received blue correction coefficient Kb (specifically, Kb1 or Kb2) is multiplied.

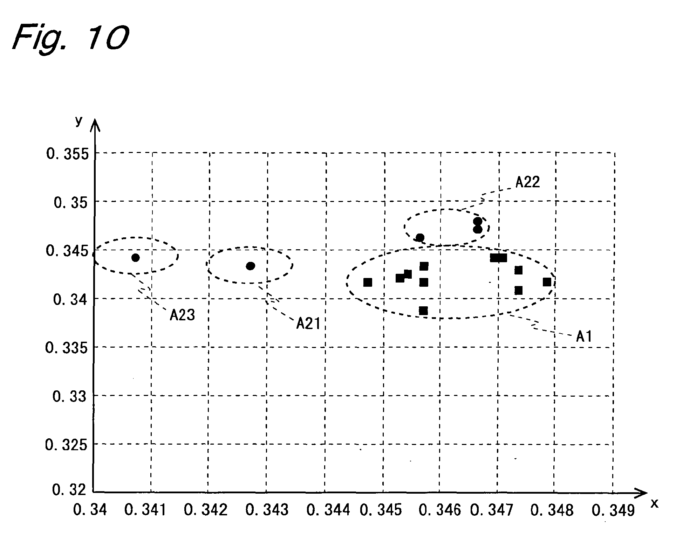

Here, the correction coefficients Kr, Kg, and Kb for the respective colors which are provided to the pixel correction circuits for the respective colors are stored in the correction coefficient storage unit 25. These correction coefficients are determined according to the optical characteristics of a light guide element 12. But unlike the case of the first embodiment, the correction area address storage unit 22 in the present embodiment stores three different sets of correction coefficients Kr, Kg, and Kb respectively associated with the addresses of three areas which will be described later, into which is further divided the display area end portion A2 of a liquid crystal panel 11 which is an area where lights subjected to an optical path change by the light guide element 12 are transmitted through, among the addresses of the RAMs for the respective colors included in the data correcting unit 33. The three areas in the light guide element 12 will be described below with reference to Fig. 10.

Fig. 10 is an xy chromaticity diagram showing the optical characteristics of the respective areas of the light guide element. This Fig. 10 shows chromaticities (chromaticity coordinates) at locations on the liquid crystal panel for when all pixels are allowed to perform white display. Specifically, Fig. 10 shows the chromaticity of light exiting from a normal display area A1 (encircled by a dashed line A1 in the drawing) ; the chromaticity of light exiting from an area A22 (encircled by a dashed line A22 in the drawing) near a central portion of the display area end portion A2 (hereinafter, referred to as the central portion A22) ; the chromaticity of light exiting from an area A21 (encircled by a dashed line A21 in the drawing) of the display area end portion A2 on the side close to the normal display area A1 (the area A21 indicates a portion near a left end portion of the display area end portion A2 in Fig. 2, and hereinafter, referred to as the left end portion A21); and the chromaticity of light exiting from an area A23 (encircled by a dashed line A23 in the drawing) of the display area end portion A2 on the side far from the normal display area A1 (the area A23 indicates a portion near a right end portion of the display area end portion A2 in Fig. 2, and hereinafter, referred to as the right end portion A23). Note that in Fig. 2 an optical path OP4 represents one of the optical paths of lights exiting from the normal display area A1, an optical path OP1 represents one of the optical paths of lights exiting from the left end portion A21, an optical path OP2 represents one of the optical paths of lights exiting from the central portion A22, and an optical path OP3 represents one of the optical paths of lights exiting from the right end portion A23.

As shown in this Fig. 10, even in lights transmitted through the same light guide element 12, the chromaticity of light exiting from the central portion A22 of the display area end portion A2, the chromaticity of light exiting from the left end portion A21, and the chromaticity of light exiting from the right end portion A23 differ from one another. Thus, in order to uniformly (irrespective of pixel locations) compensate for a reduction in the lightness, i.e., a change in the chromaticity, of display colors which is caused by the light guide element 12, correction coefficients Kr, Kg, and Kb considering the differences in chromaticity need to be prepared for the respective areas.

Hence, the correction area address storage unit 22 stores, among the addresses of the RAMs for the respective colors, a first correction area address AD1 at which are stored pixel values to be provided to display elements disposed in the left end portion A21; a second correction area address AD2 at which are stored pixel values to be provided to display elements disposed in the central portion A22; and a third correction area address AD3 at which are stored pixel values to be provided to display elements disposed in the right end portion A23. In addition, the correction coefficient storage unit 25 stores first correction coefficients Kr1, Kg1, and Kb1 which are correction coefficients associated with the first correction area address AD1, and which are set to compensate for a change in the chromaticity of light exiting from the left end portion A21; second correction coefficients Kr2, Kg2, and Kb2 which are correction coefficients associated with the second correction area address AD2, and which are set to compensate for a change in the chromaticity of light exiting from the central portion A22; and third correction coefficients Kr3, Kg3, and Kb3 which are set to compensate for a change in the chromaticity of light exiting from the right end portion A23.

The correction control circuit 235 compares an address of the RAMs for the respective colors which is included in a RAM control signal CS sent from the RAM control circuit 234, with each of three of the first to third correction area addresses AD1 to AD3 read from the correction area address storage unit 22. When the address of the RAMs for the respective colors matches the first correction area address AD1, the correction control circuit 235 provides first correction coefficients Kr1, Kg1, and Kb1 read from the correction coefficient storage unit 25, to the pixel correction circuits for the respective colors. When the address of the RAMs for the respective colors matches the second correction area address AD2, the correction control circuit 235 provides second correction coefficients Kr2, Kg2, and Kb2 read from the correction coefficient storage unit 25, to the pixel correction circuits for the respective colors. When the address of the RAMs for the respective colors matches the third correction area address AD3, the correction control circuit 235 provides third correction coefficients Kr3, Kg3, and Kb3 read from the correction coefficient storage unit 25, to the pixel correction circuits for the respective colors.

### <2.3 Effect of the second embodiment>

As described above, in the liquid crystal display device including the data correcting unit 33 of the display control circuit 200 in the present embodiment, by using appropriate correction coefficients which differ between the left end portion A21, the central portion A22, and the right end portion A23 of the display area end portion A2 of the liquid crystal panel 11, a change in chromaticity (a reduction in the lightness of the respective colors) which is caused by the light guide element 12 is compensated for on an area-by-area basis. Thus, a single seamless image irrespective of the location (of display elements emitting light that is transmitted through) in the light guide element 12 can be displayed without a viewer given a feeling of unnaturalness caused by the difference in chromaticity.

### <3. Variants>

### <3.1 First principal variant>

Although in the above-described first embodiment the configuration is such that a red RAM 231, a green RAM 232, and a blue RAM 233 are provided and correction coefficients Kr, Kg, and Kb are provided for each color, the configuration may be such that, instead of providing dedicated RAMs (or storage areas) for each color, only one RAM (or storage area) is provided without distinguishing therebetween and a correction coefficient K common to all colors is determined, and only one pixel correction circuit common to all colors is provided. In this configuration, since the same correction is made for all colors, although a reduction in luminance caused by a light guide element 12 is compensated for, a change in chromaticity is not fully compensated for. However, by reducing the numbers of RAMs and pixel correction circuits to one each, the configuration of a data correcting unit 22 can be simplified, and a single seamless displayed image can be displayed without a viewer given a feeling of unnaturalness caused by the difference in luminance, and a feeling of unnaturalness caused by the difference in chromaticity can be reduced.

Likewise, in the above-described second embodiment, too, the configuration may be such that only one RAM is provided and correction coefficients K1, K2, and K3 common to all colors and associated with three areas of the display area end portion A2 are set, and only one pixel correction circuit common to all colors is provided. In this configuration, too, a change in chromaticity caused by the light guide element 12 is not fully compensated for. However, by reducing the numbers of RAMs and pixel correction circuits to one each, the configuration of the data correcting unit 22 can be simplified, and a single seamless displayed image irrespective of the location (of display elements emitting light that is transmitted through) in the light guide element 12 can be displayed without a viewer given a feeling of unnaturalness caused by the difference in luminance, and a feeling of unnaturalness caused by the difference in chromaticity can be reduced.

Although in the second embodiment the configuration is such that the display area end portion A2 of a liquid crystal panel 11 is divided into a left end portion A21, a central portion A22, and a right end portion A23 thereof, and correction coefficients for the respective portions are set, the configuration may be such that the display area end portion A2 is divided into two or four or more areas and correction coefficients for the respective areas are set. In that case, correction coefficients are set for each group (area) so as to compensate for a change in the chromaticity of light exiting from display elements in each group (area). Note that, when compensation according to the disposition location of display elements needs to be performed accurately (i.e., when a large number of different correction coefficients are set), the number of groups (the number of areas) may be set to the highest possible value. Provided that there are no problems with storage capacity, computation speed, etc., the number of groups (the number of areas) can be set, at the maximum, to the number of display elements (for the respective colors) disposed in the display area end portion A2, i.e., the number of video signal lines. Note that in this case one group corresponds to one display element.

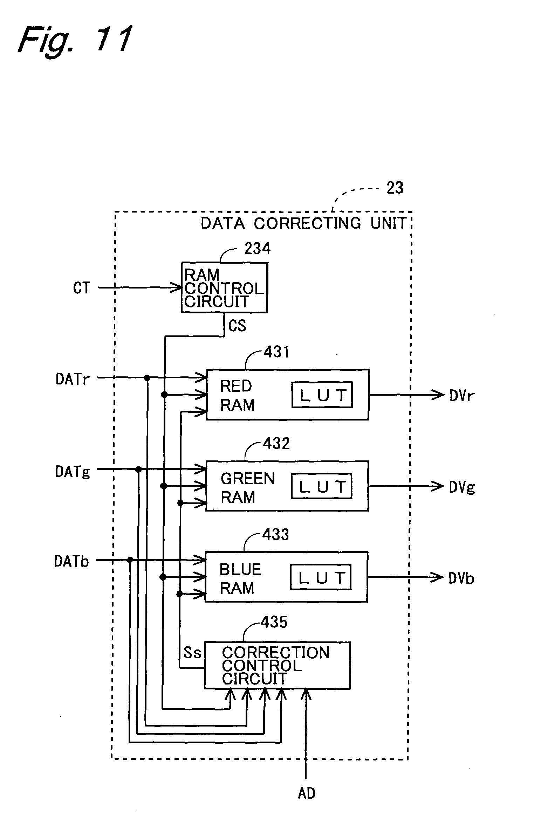

Furthermore, although in the first and second embodiments the configuration is such that one each of correction coefficients Kr, Kg, and Kb is set for each color or correction coefficients Kr, Kg, and Kb, the number of which is determined according to the number of areas, are set, the correction coefficients Kr, Kg, and Kb may have values that change according to the pixel value. This will be specifically described below with reference to Fig. 11.

Fig. 11 is a block diagram showing a configuration of a data correcting unit included in a display control circuit in the present variant. A data correcting unit 23 shown in this Fig. 11 includes the same RAM control circuit 234 as that in a data correcting unit 23 shown in Fig. 7, and includes a red RAM 431, a green RAM 432, a blue RAM 433, and a correction control circuit 435 which differ in configuration from those in the data correcting unit 23 shown in Fig. 7.

The red RAM 431, the green RAM 432, and the blue RAM 433 store display data DATr, DATg, and DATb of the respective colors, as do RAMs shown in Fig. 7, and store lookup tables (hereinafter, referred to as "LUTs") in which a given pixel value is associated with a corrected pixel value which is uniquely associated with the given pixel value. Note that data in the LUTs is stored in advance in an EEPROM or the like, which is not shown, and is loaded into the RAMs upon activation of the device. A corrected pixel value stored in the LUTs is calculated by multiplying a pixel value by one of correction coefficients Kr, Kg, and Kb set for each pixel value, which are appropriately determined according to the pixel value. Therefore, the configuration may be such that, instead of the LUTs, calculation is performed by an appropriate mathematical formula, but the configuration of using the LUTs is desirable in terms of processing speed, etc.

The correction control circuit 435 receives a RAM control signal CS sent from the RAM control circuit 234 and compares an address of the RAMs for the respective colors, which is included in the RAM control signal CS and at which pixel values currently read are stored, with a correction area address AD read from a correction area address storage unit 22. When the addresses match, the correction control circuit 435 provides a correction instruction signal Ss to each RAM to correct the pixel values by referring to the LUTs stored in the respective RAMs. When the RAMs do not receive a correction instruction signal Ss, the RAMs output read pixel values as they are. When the RAMs receive a correction instruction signal Ss, the RAMs output pixel values corrected through the LUTs, as digital image signals of the respective colors Dvr, Dvg, and Dvb.

As such, by referring to the LUTs, corrected pixel values obtained by multiplication of correction coefficients which are appropriately set for each pixel value can be easily obtained, and image display is performed on the light guide element 12 using the corrected pixel values. Therefore, display can be performed without a viewer given a feeling of unnaturalness caused by the difference in chromaticity, over all gray levels.

### <3.2 Second principal variant>

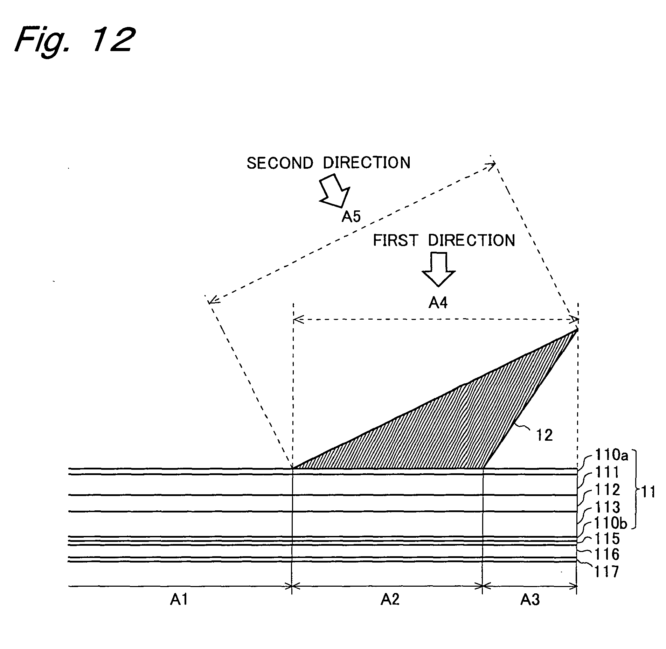

In the first and second embodiments, a signal seamless image can be displayed without a viewer given a feeling of partial unnaturalness caused by the difference in chromaticity. Furthermore, by configuring as follows, display can also be performed without creating a feeling of partial unnaturalness caused by the difference in size in a left-right direction in the drawing. This will be described below with reference to Fig. 12.

Fig. 12 is a diagram for describing a display range of a liquid crystal display device in a second principal variant. As shown in Fig. 12, when a light guide element 12 is viewed from a first direction, an image displayed in a display area end portion A2 is displayed scaled up to the size (length) of a first visual recognition area A4. Therefore, to suppress a feeling of unnaturalness caused by the difference in the above-described size (hereinafter, the size in the left-right direction in the drawing is also simply referred to as "length"), the image displayed in the display area end portion A2 is displayed scaled down. Specifically, when the length (in the left-right direction in the drawing) of the display area end portion A2 is A2 and the length of the first visual recognition area A4 is A4, an image scaled down to a length of (A2/A4) is displayed in the display area end portion A2. By doing so, the length between pixels in an image displayed in a normal display area A1 and the length between pixels in an image displayed (visually recognized) in the first visual recognition area A4 become equal to each other, and thus, the difference in the above-described size (length) is compensated for, enabling to suppress or eliminate a feeling of unnaturalness caused by the difference.

This fact applies in the same way even if the viewing direction is changed. As shown in Fig. 12, when the light guide element 12 is viewed from a second direction, an image displayed in the display area end portion A2 is displayed scaled up to the length of a second visual recognition area A5. Therefore, to suppress a feeling of unnaturalness caused by the difference in the above-described size (length), when the length of the second visual recognition area A5 is A5, an image scaled down to a length of (A2/A5) is displayed in the display area end portion A2. By doing so, the length of an image displayed in the normal display area A1 and the length of the display area end portion A2 become equal to each other, and thus, the difference in the above-described size (length) is compensated for, enabling to suppress or eliminate a feeling of unnaturalness caused by the difference.

Note that, though not shown, even when the light guide element 12 is viewed from a direction other than the first and second directions, e.g., an opposite direction of the second direction with reference to the first direction, only the length of a visual recognition area is changed, and thus, by displaying an image scaled down in the same manner as the above in the display area end portion A2, a feeling of unnaturalness caused by the difference in the above-described size (length) can be suppressed or eliminated.

Note also that the case may be considered in which depending on the viewing direction the length of a visual recognition area (here, A7) is shorter than A2. But, as with the above, by displaying an image scaled up to a length of (A2/A7) in the display area end portion A2, a feeling of unnaturalness caused by the difference in the above-described size (length) can be suppressed or eliminated.

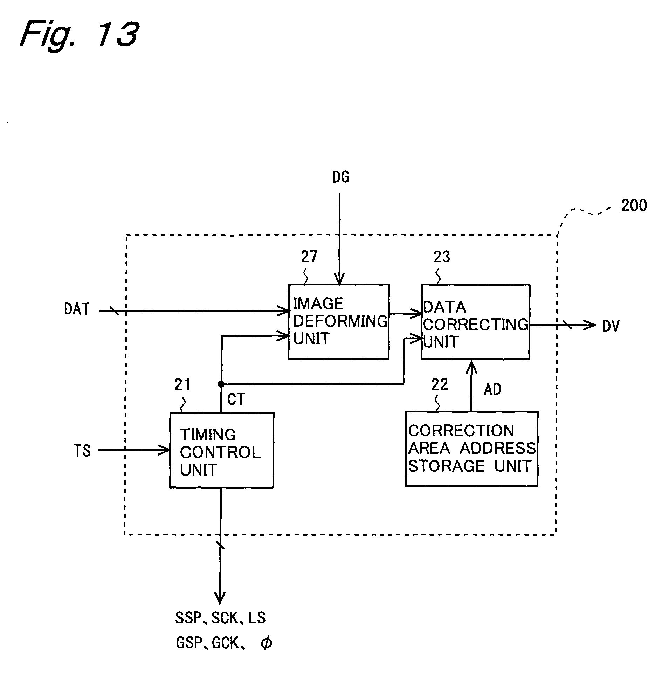

As described above, an image to be displayed in the display area end portion A2 is scaled down and deformed (scaled up and deformed depending on the viewing direction) by performing predetermined image processing or a predetermined thinning-out operation on original image data. First, the image processing will be described with reference to Fig. 13.

Fig. 13 is a block diagram showing a configuration of a control circuit including an image deforming unit that performs the above-described image processing. The display control circuit shown in this Fig. 13 is obtained by adding the image deforming unit to the configuration of the above-described display control circuit shown in Fig. 6, and other components are the same, and thus, the same components are denoted by the same reference numerals and description thereof is omitted.

An image deforming unit 27 receives an angle detection signal DG from an angle detecting unit which is not shown and which includes a sensor that detects an angle formed by liquid crystal panels 11 and 13, and calculates which direction the liquid crystal panel 11 is viewed from (e.g., viewed from the first or second direction), from the angle formed by the liquid crystal panels 11 and 13 which is indicted by the angle detection signal DG. Of course, it is extremely difficult to accurately detect which direction the liquid crystal panel 11 is actually viewed from, from the angle formed by the liquid crystal panels 11 and 13. However, when the angle formed by the liquid crystal panels 11 and 13 is 180 degrees (i.e. , the liquid crystal panels 11 and 13 lie substantially in the same plane), it is common that the liquid crystal panel 11 is viewed from the front, and thus, the viewing direction can be determined as the first direction.

Alternatively, the configuration may be such that a sensor is provided that detects a tilt of the liquid crystal panel 11 with respect to a vertical direction (by using gravity) instead of an angle formed by the liquid crystal panels 11 and 13, and the viewing angle is detected from the tilt. Furthermore, the configuration may be such that a viewing direction is estimated based on the type of application that creates an image being displayed (e.g., software that displays a television image). In addition, any known configuration for measuring or estimating the viewing direction can be adopted. By thus detecting a viewing angle, the length (size) of a visual recognition area can be calculated, and thus, a feeling of unnaturalness caused by the difference in the above-described size (length) can be properly suppressed or eliminated. Note that the viewing angle may be fixed to one angle. Even in this case, the above-described feeling of unnaturalness can be suppressed to a certain extent or can be eliminated.

The image deforming unit 27 scales down an image to be displayed in the display area end portion A2, according to the viewing direction (hereinafter, also referred to as the visual recognition direction) which is determined based on the angle detection signal DG in the above-described manner, whereby an image that is actually displayed is displayed in its original size (length). Specifically, as described previously, when the light guide element 12 is viewed from, for example, the first direction, an image displayed in the display area end portion A2 is scaled up by the light guide element 12 to the length of the first visual recognition area A4, i.e., by a factor of (A4/A2). Therefore, the image deforming unit 27 scales down the image to be displayed in the display area end portion A2 by a factor of (A2/A4). When the light guide element 12 is viewed from the second direction, an image to be displayed in the display area end portion A2 is scaled down by a factor of (A2/A5).

As such, the image deforming unit 27 scales down the length (in the left-right direction in the drawing) of a displayed image by a ratio (scale-down ratio) obtained by dividing the display area end portion A2 by the length of a visual recognition area. Then, since the length of the visual recognition area can be easily calculated based on the visual recognition direction, the image deforming unit 27 calculates the scale-down ratio (scale-up ratio depending on the viewing direction) from the angle indicated by the angle detection signal DG and based on a predetermined calculation formula, a lookup table, etc. Then, the image deforming unit 27 scales down an image to be displayed by a display data signal DAT, based on the calculated ratio, and provides the scaled-down image to a data correcting unit 23 as a new display data signal DAT.

Note that the above-described scale-down of an image by the image deforming unit 27 can be performed by known image processing (e.g., a process of appropriately thinning out pixel columns in a scale-down target portion of a displayed image), but instead of this, the scale-down of an image may be performed by a video signal line drive circuit 300 appropriately thinning out video data provided to video signal lines SL(1) to SL(M). For example, when the light guide element 12 is provided at a location between a video signal line SL (701) and a video signal line SL(800) and an image needs to be scaled down by 1/2, corresponding video signals are thinned out every other video signal line and the resulting video signals (e.g., only data for odd columns) are provided in turn to video signal lines SL(701) to SL(750), whereby the scale-down of the image can be implemented. In such a configuration, it can be said that the above-described function of the image deforming unit 27 is implemented by the video signal line drive circuit 300.

Alternatively, for example, when the light guide element 12 is provided at a location between a scanning signal line GL (501) and a scanning signal line GL (600) (by turning a display screen counterclockwise 90 degrees) and an image needs to be scaled down by 1/2, with corresponding video signals being left as they are, a scanning signal line drive circuit 400 places scanning signal lines GL(501) to GL(550) in an active state at intervals twice as long as those for other signal lines, whereby the scale-down of the image can be implemented. Placing the scanning signal lines GL in an active state at intervals twice as long in the above-described manner can be easily implemented by, for example, a technique in which, while the scanning signal lines GL(501) to GL(550) are placed in an active state, each time one of these scanning signal lines is placed in an active state in turn, a gate enable signal provided to the scanning signal line drive circuit 400 is turned off during one scanning period. In such a configuration, it can be said that the above-described function of the image deforming unit 27 is implemented by the scanning signal line drive circuit 400 or a part of the display control circuit 200.

However, when an image displayed in the display area end portion A2 is scaled down as in the above-described variant, an area where no image is displayed (specifically, an area of the display area end portion A2 near a left end in the drawing) occurs, and thus, an area where display can be performed in practice is wasted. Hence, in order to use the whole display area end portion A2, an image displayed in a normal display area A1 is appropriately scaled up, and a part (near a right end) of the image that is originally supposed to be displayed in the normal display area A1 is displayed in the display area end portion A2. By doing so, by an image displayed in the normal display area A1 and an image displayed in a visual recognition area such as the first or second visual recognition area A4 or A5 (through display in the display area end portion A2), a seamless image scaled up as a whole can be displayed.

Specifically, for example, in the case of visual recognition from the first direction, images displayed in the normal display area A1 and the visual recognition area A4 (by the light guide element 12) are displayed in practice in the normal display area A1 and the display area end portion A2. Hence, in the normal display area A1 is displayed a part of an image obtained by scaling up the entire image by a factor of (A1+A4)/(A1+A2), i.e., a portion of the scaled-up image corresponding to A1/(A1+A2), and in the display area end portion A2 is displayed an image obtained by scaling down a portion of the scaled-up image corresponding to A2/ (A1+A2) by a factor of (A2/A4). By doing so, an image is displayed in the visual recognition area A4 scaled up by a factor of (A4/A2). As a result, a seamless scaled-up image can be displayed in the normal display area A1 and the first visual recognition area A4.

To display such a seamless image, the image deforming unit 27 first scales up, based on a visual recognition direction (calculated based on an angle detection signal DG in the above-described manner), an image represented by a display data signal DAT by a relevant scale-up ratio (a scale-down ratio depending on the viewing direction) (specifically, performs a process of appropriately complementing lacking data of pixel columns in image data), thereby scaling up an image displayed in practice to a size (length) larger than the original one. For example, when the light guide element 12 is viewed from, for example, the first direction, the image represented by the display data signal DAT is scaled up by a factor of (A1+A4)/(A1+A2). Thereafter, the image deforming unit 27 provides a part of the scaled-up image as image data to be displayed in the normal display area A1, as described above, and scales down (scales up depending on the viewing direction) a remaining portion of the scaled-up image according to the visual recognition direction and displays the scaled-down image in the display area end portion A2. By this, a seamless scaled-up image can be displayed in the normal display area A1 and the first visual recognition area A4. Note that the above-described scale-up ratio and scale-down ratio are similarly calculated from an angle indicated by an angle detection signal DG and based on a predetermined calculation formula, a lookup table, etc.

Note that the above-described scale-down can be similarly implemented by thinning out (of image data) by the aforementioned image processing technique, etc. Note also that the above-described scale-up can also be easily implemented by a known image processing technique (e.g., a technique in which an interpolation data for one column is generated based on data for two adjacent columns, and the interpolation data is inserted between the corresponding two columns as an additional column), a technique in which the sampling frequency or clock frequency (of the scanning signal line drive circuit 400 depending on the case) of the video signal line drive circuit 300 is increased (e.g., doubled), etc.

By the operation of the image deforming unit 27 such as that described above, a difference in the above-described size (length) which occurs in the light guide element 12 is compensated for, and thus a feeling of unnaturalness caused by the difference can be suppressed or eliminated. Furthermore, display is performed over the entire visual recognition area, and thus, a seamless scaled-up image can be displayed.

### <3.3 Other variants>

Although in the first and second embodiments the configuration is such that a display data signal DAT provided from a source external to a device is temporarily stored in a red RAM 231, a green RAM 232, and a blue RAM 233, the configuration may be such that the RAMs for the respective colors and a RAM control circuit 234 are omitted and a display data signal DAT is directly provided to pixel correction circuits for the respective colors. In this configuration, a correction area address storage unit 22 stores, instead of an address of the RAMs for the respective colors, disposition location information (e.g., a data number or timing associated with a data location) of pixel values for a display area end portion A2, in a display data signal DAT. A correction control circuit 235 multiplies, based on the disposition location information, pixel values to be provided to display elements disposed in the display area end portion A2 among pixel values included in the display data signal DAT, by predetermined correction coefficients, thereby correcting the pixel values.

Although in the first and second embodiments the configuration is such that the pixel correction circuits for the respective colors are included in a display control circuit 200, the configuration may be such that the pixel correction circuits for the respective colors are included in a video signal line drive circuit 300. For example, the pixel correction circuits for the respective colors are analog voltage multiplication circuits, and are provided in the video signal line drive circuit 300 such that analog voltages respectively corresponding to voltage values obtained by multiplying analog voltages, which are obtained by converting a display data signal DAT which is digital data by a D/A conversion circuit which is included in the video signal line drive circuit 300 and which is not shown, by predetermined correction coefficients are provided to pixel formation portions P(n, m) provided in the display area end portion A2. Alternatively, when a display data signal DAT is an analog signal, the pixel correction circuits for the respective colors are analog voltage multiplication circuits as well, and are provided in the video signal line drive circuit 300 such that, before a display data signal is provided to a sampling switch which is included in the video signal line drive circuit 300 and which is not shown, analog voltages corresponding to voltage values, which are obtained by multiplying voltage values of the display data signal by predetermined correction coefficients, are provided to the sampling switch.

Although in the first and second embodiments a light guide element 12 has, as shown in Fig. 2, a cross-section of a triangular prism, the light guide element 12 may have any shape, e.g., a cross-sectional shape of a curved surface, or any structure as long as the light guide element 12 can guide light from the display area end portion A2 (or other display areas) so as to display an image above a picture-frame area A3; for example, a known optical path changing element or light guide element such as a prism or a lens may be used. In addition, although the light guide element 12 has a form included in a range of directly above the picture-frame area A3 of a liquid crystal panel 11, the light guide element 12 may have a form that encompasses only a range of a part of a portion above the picture-frame area A3. Note that the present invention is applicable even if the light guide element 12 has a form that does not encompass a range of the portion above the picture-frame area A3.

Although in the first and second embodiments description is made taking a liquid crystal display device as an example, the display device is not limited to one using a liquid crystal as long as the display device is of the matrix type. For example, the display device may be one using, instead of a liquid crystal, for example, an electro-optic element such as an inorganic EL (Electro Luminescence) element or an organic EL element. Here, the electro-optic element refers to all types of elements whose optical characteristics change by provision of electricity, e. g. , in addition to EL elements, FEDs (Field Emission Displays), LEDs, charge-driven elements, and E inks.

### INDUSTRIAL APPLICABILITY

The present invention is applied to a display device including a display panel, e.g., a liquid crystal panel, and is suitably used for a display device including, on a display panel, a light guide element for performing an optical path change.

### DESCRIPTION OF REFERENCE NUMERALS

10: TFT (THIN FILM TRANSISTOR)
11 and 13: LIQUID CRYSTAL PANEL
12 and 14: LIGHT GUIDE ELEMENT
21: TIMING CONTROL UNIT
22: CORRECTION AREA ADDRESS STORAGE UNIT
23 and 36: DATA CORRECTING UNIT
25: CORRECTION COEFFICIENT STORAGE UNIT
27: IMAGE DEFORMING UNIT
200: DISPLAY CONTROL CIRCUIT
231 and 431: RED RAM
232 and 432: GREEN RAM
233 and 433: BLUE RAM
234: RAM CONTROL CIRCUIT
235 and 435: CORRECTION CONTROL CIRCUIT
236: RED PIXEL CORRECTION CIRCUIT
237: GREEN PIXEL CORRECTION CIRCUIT
238: BLUE PIXEL CORRECTION CIRCUIT
300: VIDEO SIGNAL LINE DRIVE CIRCUIT
400: SCANNING SIGNAL LINE DRIVE CIRCUIT
500: DISPLAY UNIT
600: COMMON ELECTRODE DRIVE CIRCUIT
A1: NORMAL DISPLAY AREA
A2: DISPLAY AREA END PORTION
A3: PICTURE-FRAME AREA
A4: FIRST VISUAL RECOGNITION AREA
A5: SECOND VISUAL RECOGNITION AREA
P(n, m): PIXEL FORMATION PORTION (PIXEL)
Epix: PIXEL ELECTRODE
Ecom: COMMON ELECTRODE (COUNTER ELECTRODE)
G(k): SCANNING SIGNAL (k=1, 2, 3,...)
GL(k): SCANNING SIGNAL LINE (k=1, 2, 3,...)
D(j): VIDEO SIGNAL (j-1, 2, 3,...)
SL(j): VIDEO SIGNAL LINE (j=1, 2, 3,...)
AD: CORRECTION AREA ADDRESS
CT and CS: CONTROL SIGNAL

## Claims

1. A display device that displays an image based on an image signal provided from a source external to the device, the display device comprising:
a display panel in which a plurality of display elements for displaying the image are arranged in a matrix, and which has a picture-frame area provided at an end portion thereof, the picture-frame area having no display elements arranged therein;
a light guide element which is provided on a portion of the display panel near the picture-frame area, and which guides light emitted from the display element, above the picture-frame area by performing an optical path change;
a pixel correction circuit that multiplies a pixel value, among pixel values included in the image signal, that is to be provided to a display element whose emitted light is subjected to an optical path change by the light guide element, by a correction coefficient and sets a value obtained as a result of the multiplication as a new pixel value, the correction coefficient being predetermined so as to compensate for attenuation of light transmitted through the light guide element; and
drive means for driving the display element subjected to the optical path change, according to the new pixel value obtained by the pixel correction circuit.

2. The display device according to claim 1, wherein
the display panel is provided in plural number so as to come close to or come into contact with at least one other display panel, and
the light guide element is disposed to come into contact with another light guide element provided on another liquid crystal panel close to or in contact with the liquid crystal panel on which the light guide element is provided.

3. The display device according to claim 1, wherein
the display panel includes a plurality of types of display elements that emit different colors, and
the pixel correction circuit multiplies a pixel value to be provided to the display element subjected to the optical path change, by one of a plurality of correction coefficients that is associated with a color of light emitted from the display element subjected to the optical path change, the correction coefficients being predetermined for each of the colors.

4. The display device according to claim 1, wherein the pixel correction circuit multiplies a pixel value to be provided to the display element subjected to the optical path change, by one of a plurality of correction coefficients that are associated with disposition locations of the respective display elements subjected to the optical path change, the correction coefficients being predetermined for each of a plurality of groups into which the display elements subjected to the optical path change are divided according to disposition location.

5. The display device according to claim 4, wherein the plurality of groups include:
a first group including a display element facing a first near end portion area of a surface of the light guide element facing the display elements subjected to the optical path change, the first near end portion area being on a side close to the picture-frame area near the light guide element;
a second group including a display element facing a second near end portion area of the surface that is on a side far from the picture-frame area near the light guide element; and
a third group including a display element facing a near center area of the surface that is between the first near end portion area and the second near end portion area.

6. The display device according to claim 1, further comprising an image deforming unit that deforms, when an image based on the image signal which is to be displayed by a display element subjected to an optical path change by the light guide element is displayed such that a size of the image is changed by the light guide element, an image created based on an image signal to be provided to the display element subjected to the optical path change, so as to compensate for a change in the size, thereby generating a new image signal, wherein
the pixel correction circuit multiplies a pixel value included in the new image signal generated by the image deforming unit, by the correction coefficient and sets a value obtained as a result of the multiplication as a new pixel value.

7. The liquid crystal display device according to claim 6, wherein the image deforming unit calculates a scale-up ratio or a scale-down ratio of an image displayed by the light guide element, based on a direction from which the display panel is viewed, and deforms, based on the calculated scale-up ratio or scale-down ratio, an image created based on an image signal to be provided to a corresponding display element, so as to compensate for a change in the size, thereby generating the new image signal.

8. The display device according to claim 6, wherein
the image deforming unit deforms an image created based on the image signal, such that an entire image displayed on the display panel and including an image displayed by the light guide element has a constant scale-up ratio or scale-down ratio over the entire image to be displayed by the image signal, thereby generating the new image signal, and
the pixel correction circuit multiplies a pixel value, among pixel values included in the image signal generated by the image deforming unit, that is to be provided to a display element whose emitted light is subjected to an optical path change by the light guide element, by the correction coefficient and sets a value obtained as a result of the multiplication as the new pixel value.

9. The liquid crystal display device according to claim 1, wherein the display panel includes liquid crystal elements as the display elements.

10. A method of driving a display device including a display panel in which a plurality of display elements for displaying an image based on an image signal provided from a source external to the device are arranged in a matrix, and which has a picture-frame area provided at an end portion thereof, the picture-frame area having no display elements arranged therein; and a light guide element which is provided on a portion of the display panel near the picture-frame area, and which guides light emitted from a display element, above the picture-frame area by performing an optical path change, the method comprising:
a pixel value correcting step of multiplying a pixel value, among pixel values included in the image signal, that is to be provided to a display element whose emitted light is subjected to an optical path change by the light guide element, by a correction coefficient and setting a value obtained as a result of the multiplication as a new pixel value, the correction coefficient being predetermined so as to compensate for attenuation of light transmitted through the light guide element; and
a driving step of driving the display element subjected to the optical path change, according to the new pixel value obtained in the pixel value correcting step.
